# EUROPEAN PATENT APPLICATION

(11) **EP 4 481 703 A2**
(43) Date of publication of application: **25.12.2024**
(21) Application number: 24172398.0
(22) Date of filing: 25.04.2024
(51) Int. Cl.: G08B 7/06, G08B 27/00, G01C 21/00, G01S 13/76, G08B 17/00, G08B 21/04

(54) **COMPUTERIZED SYSTEMS AND METHODS FOR SAFETY SENSOR ACTIVATION AND OCCUPANCY TRACKING WITHIN A LOCATION**

(30) Priority: 03.06.2023 US 202363506064 P
(71) Applicant: Ademco, Inc., Golden Valley, MN 55422 (US)
(72) Inventor: CLARK, Meghan, Berkeley, California (US)
(74) Representative: Murgitroyd & Company

(57) **Abstract**

Disclosed are systems and methods of a novel framework for automatically and dynamically performing occupancy sensing within a location, for which electronic extraction instructions can be provided to first responders during an emergency. The disclosed framework can operate to automatically generate a floor plan for the location, which can be leveraged to determine a precise location of the living things (e.g., people or pets) within the location. Accordingly, the disclosed framework can operate to provide security measures so as to enable the positional identification of living things during an emergency which can lead to their safe and efficient extraction to safety.

## Description

### FIELD OF THE DISCLOSURE

The present disclosure is generally related to location-based safety measures, and more particularly, to a decision intelligence (DI)-based computerized framework that automatically and dynamically performs occupancy sensing within a location based on an automatically generated floor plan, or similar type of generated schematic, of the location.

### BACKGROUND

Conventional smoke detectors are devices within a location that sense smoke, typically as an indicator of fire. Smoke detectors, also known as smoke alarms, generally issue an audible or visual alarm.

### SUMMARY OF THE DISCLOSURE

However such smoke detectors are focused on alerting individuals within a location as to an occurrence of fire. That is, conventional smoke detectors simply alert people within a location that the detector itself has detected a fire.

To that end, as discussed herein, disclosed are computerized systems and methods that provide a novel framework for dynamic occupancy sensing that can enable first responders to locate individuals (e.g., people and pets) within a location. As discussed herein, a location can be any type of building, structure or definable physical, geographic location that can be situated with smoke detectors, such as, but not limited to, a home, office, garage, train cars, and the like.

According to some embodiments, the disclosed framework can detect that a fire is at location, and based on advanced computational analysis of the information related to the fire, the location, living things (e.g., people/pets) within/around the location, among other variables, can determine a real-time position of each living thing within the location. Accordingly, in some embodiments, such positioning can be compiled and communicated to first responders, which can be utilized by the responders to locate and extract the living things during an emergency.

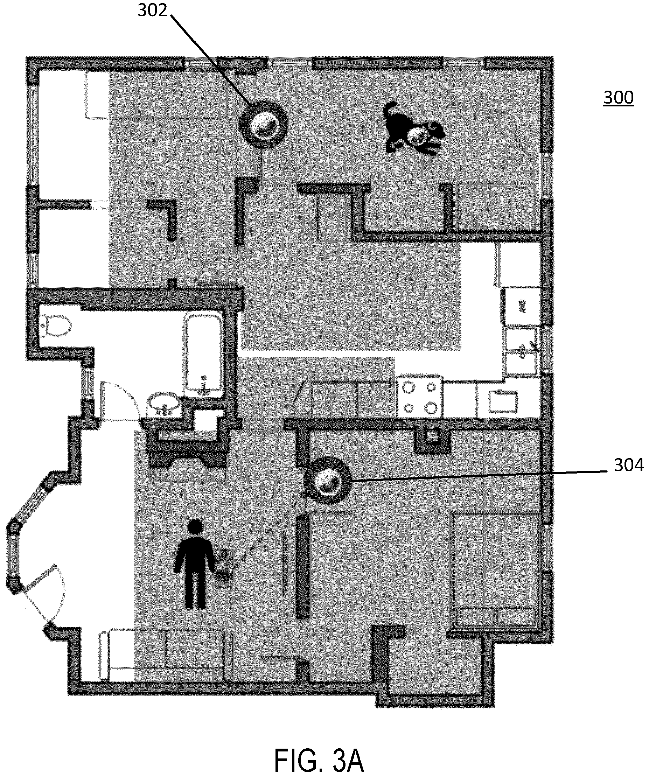

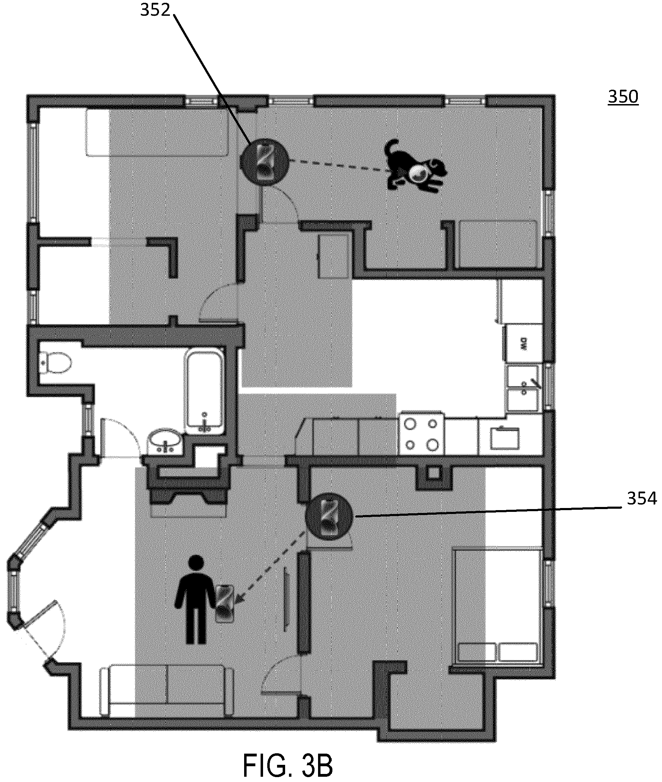

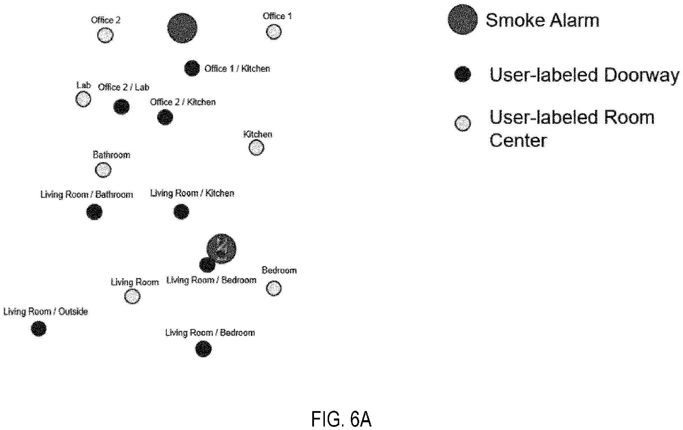

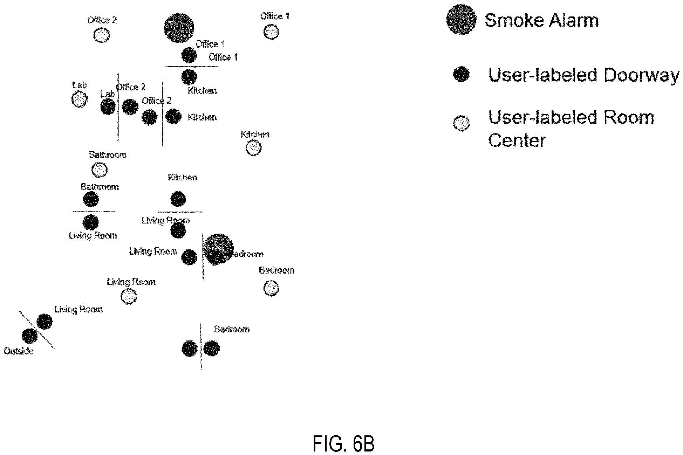

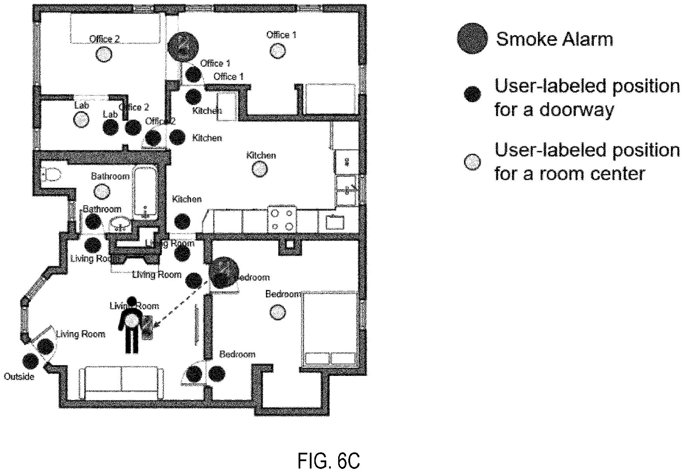

According to some embodiments, the disclosed framework can operate to electronically compile a floor plan for a location. As provided below, the floor plan can digitally represent the walls, doors, and other structural components of the location, and can further indicate the relationship of smoke detectors in the location. Examples of such are provided in FIG. 3A, FIG. 3B, FIG. 6A, FIG. 6B, and FIG. 6C, as discussed below. Accordingly, in some embodiments, the dynamically determined location of the living things within the location can be performed in association with and/or based on the automatically generated floor plan of the location. Thus, the locations of each living thing within the location can be filtered down to specific positions within specifically delineated rooms of the location, as identified via the compiled floor plan.

As discussed herein, a floor plan is a scaled diagram of a location, room or building (e.g., viewed from above). The floor plan may depict an entire building, one floor of a building, or a single room. The floor plan may also include measurements, furniture, appliances, walls, windows, doors, stairs, fixtures, and/or anything other item or configuration of the location necessary to navigate the location.

It should be understood that while the discussion herein focuses on smoke detectors and detection of smoke and/or fire related hazards, it should be construed as limiting, as other types of hazardous conditions and/or emergency event within/around a location can be the basis of the disclosed framework's operation without departing from the scope of the instant disclosure (e.g., carbon monoxide detection, intruder detection, and the like).

According to some embodiments, a method is disclosed automatically and dynamically performing occupancy sensing within a location based on an automatically generated floor plan (or similar type of generated diagram) for the location. In accordance with some embodiments, the present disclosure provides a non-transitory computer-readable storage medium for carrying out the above-mentioned technical steps of the framework's functionality. The non-transitory computer-readable storage medium has tangibly stored thereon, or tangibly encoded thereon, computer readable instructions that when executed by a device cause at least one processor to perform a method that automatically and dynamically performs occupancy sensing within a location.

In accordance with one or more embodiments, a system is provided that includes one or more processors and/or computing devices configured to provide functionality in accordance with such embodiments. In accordance with one or more embodiments, functionality is embodied in steps of a method performed by at least one computing device. In accordance with one or more embodiments, program code (or program logic) executed by a processor(s) of a computing device to implement functionality in accordance with one or more such embodiments is embodied in, by and/or on a non-transitory computer-readable medium.

### DESCRIPTIONS OF THE DRAWINGS

The features, and advantages of the disclosure will be apparent from the following description of embodiments as illustrated in the accompanying drawings, in which reference characters refer to the same parts throughout the various views. The drawings are not necessarily to scale, emphasis instead being placed upon illustrating principles of the disclosure:
FIG. 1 is a block diagram of an example configuration within which the systems and methods disclosed herein could be implemented according to some embodiments of the present disclosure;
FIG. 2 is a block diagram illustrating components of an exemplary system according to some embodiments of the present disclosure;
FIG. 3A and FIG. 3B illustrate non-limiting example embodiments according to some embodiments of the present disclosure;
FIG. 4 illustrates an exemplary workflow according to some embodiments of the present disclosure;
FIG. 5 illustrates an exemplary workflow according to some embodiments of the present disclosure;
FIG. 6A, FIG. 6B and FIG. 6C depict non-limiting example embodiments according to some embodiments of the present disclosure;
FIG. 7 depicts an exemplary implementation of an architecture according to some embodiments of the present disclosure;
FIG. 8 depicts an exemplary implementation of an architecture according to some embodiments of the present disclosure; and
FIG. 9 is a block diagram illustrating a computing device showing an example of a client or server device used in various embodiments of the present disclosure.

### DETAILED DESCRIPTION

The present disclosure will now be described more fully hereinafter with reference to the accompanying drawings, which form a part hereof, and which show, by way of non-limiting illustration, certain example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and", "or", or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The present disclosure is described below with reference to block diagrams and operational illustrations of methods and devices. It is understood that each block of the block diagrams or operational illustrations, and combinations of blocks in the block diagrams or operational illustrations, can be implemented by means of analog or digital hardware and computer program instructions. These computer program instructions can be provided to a processor of a general purpose computer to alter its function as detailed herein, a special purpose computer, ASIC, or other programmable data processing apparatus, such that the instructions, which execute via the processor of the computer or other programmable data processing apparatus, implement the functions/acts specified in the block diagrams or operational block or blocks. In some alternate implementations, the functions/acts noted in the blocks can occur out of the order noted in the operational illustrations. For example, two blocks shown in succession can in fact be executed substantially concurrently or the blocks can sometimes be executed in the reverse order, depending upon the functionality/acts involved.

For the purposes of this disclosure a non-transitory computer readable medium (or computer-readable storage medium/media) stores computer data, which data can include computer program code (or computer-executable instructions) that is executable by a computer, in machine readable form. By way of example, and not limitation, a computer readable medium may include computer readable storage media, for tangible or fixed storage of data, or communication media for transient interpretation of code-containing signals. Computer readable storage media, as used herein, refers to physical or tangible storage (as opposed to signals) and includes without limitation volatile and non-volatile, removable and non-removable media implemented in any method or technology for the tangible storage of information such as computer-readable instructions, data structures, program modules or other data. Computer readable storage media includes, but is not limited to, RAM, ROM, EPROM, EEPROM, flash memory or other solid state memory technology, optical storage, cloud storage, magnetic storage devices, or any other physical or material medium which can be used to tangibly store the desired information or data or instructions and which can be accessed by a computer or processor.

For the purposes of this disclosure the term "server" should be understood to refer to a service point which provides processing, database, and communication facilities. By way of example, and not limitation, the term "server" can refer to a single, physical processor with associated communications and data storage and database facilities, or it can refer to a networked or clustered complex of processors and associated network and storage devices, as well as operating software and one or more database systems and application software that support the services provided by the server. Cloud servers are examples.

For the purposes of this disclosure a "network" should be understood to refer to a network that may couple devices so that communications may be exchanged, such as between a server and a client device or other types of devices, including between wireless devices coupled via a wireless network, for example. A network may also include mass storage, such as network attached storage (NAS), a storage area network (SAN), a content delivery network (CDN) or other forms of computer or machine-readable media, for example. A network may include the Internet, one or more local area networks (LANs), one or more wide area networks (WANs), wire-line type connections, wireless type connections, cellular or any combination thereof. Likewise, sub-networks, which may employ differing architectures or may be compliant or compatible with differing protocols, may interoperate within a larger network.

For purposes of this disclosure, a "wireless network" should be understood to couple client devices with a network. A wireless network may employ stand-alone ad-hoc networks, mesh networks, Wireless LAN (WLAN) networks, cellular networks, or the like. A wireless network may further employ a plurality of network access technologies, including Wi-Fi, Long Term Evolution (LTE), WLAN, Wireless Router mesh, or 2nd, 3rd, 4^{th} or 5^{th} generation (2G, 3G, 4G or 5G) cellular technology, mobile edge computing (MEC), Bluetooth, 802.11b/g/n, or the like. Network access technologies may enable wide area coverage for devices, such as client devices with varying degrees of mobility, for example.

In short, a wireless network may include virtually any type of wireless communication mechanism by which signals may be communicated between devices, such as a client device or a computing device, between or within a network, or the like.

A computing device may be capable of sending or receiving signals, such as via a wired or wireless network, or may be capable of processing or storing signals, such as in memory as physical memory states, and may, therefore, operate as a server. Thus, devices capable of operating as a server may include, as examples, dedicated rack-mounted servers, desktop computers, laptop computers, set top boxes, integrated devices combining various features, such as two or more features of the foregoing devices, or the like.

For purposes of this disclosure, a client (or user, entity, subscriber or customer) device may include a computing device capable of sending or receiving signals, such as via a wired or a wireless network. A client device may, for example, include a desktop computer or a portable device, such as a cellular telephone, a smart phone, a display pager, a radio frequency (RF) device, an infrared (IR) device a Near Field Communication (NFC) device, a Personal Digital Assistant (PDA), a handheld computer, a tablet computer, a phablet, a laptop computer, a set top box, a wearable computer, smart watch, an integrated or distributed device combining various features, such as features of the forgoing devices, or the like.

A client device may vary in terms of capabilities or features. Claimed subject matter is intended to cover a wide range of potential variations, such as a web-enabled client device or previously mentioned devices may include a high-resolution screen (HD or 4K for example), one or more physical or virtual keyboards, mass storage, one or more accelerometers, one or more gyroscopes, global positioning system (GPS) or other location-identifying type capability, or a display with a high degree of functionality, such as a touch-sensitive color 2D or 3D display, for example.

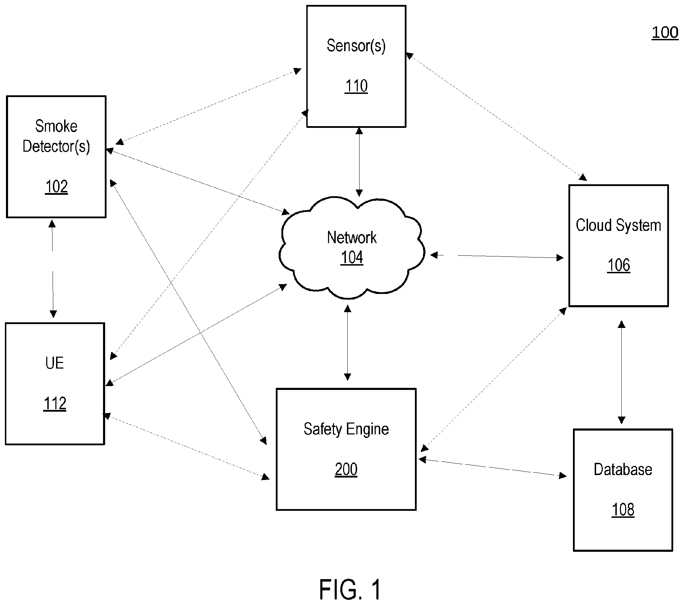

Certain embodiments and principles will be discussed in more detail with reference to the figures. With reference to FIG. 1, a system is depicted for a location 100 which includes smoke detector(s) 102, user equipment (UE) 112 (e.g., a client device, as mentioned above and discussed below in relation to FIG. 10), sensors 110, network 104, cloud system 106, database 108 and safety engine 200. It should be understood that while system 100 is depicted as including such components, it should not be construed as limiting, as one of ordinary skill in the art would readily understand that varying numbers of smoke detectors, UEs, sensors, cloud systems, databases and networks can be utilized; however, for purposes of explanation, system 100 is discussed in relation to the example depiction in FIG. 1.

According to some embodiments, smoke detector 102 can be any type of known or to be known commercially available smoke detector model, and can be configured with ultra-wide band (UWB) functionality to communicate with devices at and/or around a location. In some embodiments, the smoke detector 102 can be battery-powered or mains-powered, as discussed below at least in relation to FIG. 3A and FIG. 3B, respectively. In some embodiments, smoke detector 102 can be specifically configured with audio, visual and/or haptic components that enable communication with first responders (or other users) as to a current location of living beings within a location, as discussed below in more detail.

For example, in some embodiments, the smoke detector 102 can be configured with an array of lights or light emitting diodes (LEDs), which can be configured in any shape and/or size. The configuration of the lights/LEDs enables illumination of at least a portion of the lights so as to enable an arrow or directional indication to be provided on the smoke detector 102. In some embodiments, all of the lights/ LEDs of the smoke detector 102 may be illuminated, but the lights/LEDs associated with the directional output may be illuminated at a higher brightness (e.g., higher watts to such bulbs, for example).

In some embodiments, the smoke detector 102 can also be configured with at least one siren or speaker that can enable audible instructions to be output along the exit route. For example, a siren noise, and/or directional instruction can be provided (e.g., "walk forward until the staircase, and walk 2 flights down the stairs", and the like). Accordingly, the audio can account for the real-time conditions in the location, for which instructions can be dynamically based. Indeed, the visible output of the lights/ LEDs can be specifically configured to adapt to the real-time conditions, where the illuminated lights/ LEDs can provide indications (e.g., a crawling image, a stair case, a smoke image, and the like) of the current conditions/surroundings/dangers, as discussed below.

In a similar manner to the audio and visible output, haptic effects can be provided, which may enable visibly and/or audibly impaired individuals within the location (e.g., when the sounds within the location would be perceived as obstructing other forms of information, for example - smoke preventing viewing of the LEDs). In some embodiments, different colors, different sounds, alternating instructions (e.g., displays and/or instructions), and the like, can be utilized so as to enable instructions for all parties within a location during an emergency.

Accordingly, in some embodiments, the smoke detector 102 can provide instructions to first responders (e.g., Fire Department personnel, for example) entering the location that are searching for people or pets. For example, the lights/ LEDs and/or audio output can provide instructions to the current location and/or directional movement of the people in the building.

Accordingly, while the discussion herein uses a smoke detector as an example of the audio, visible and/or haptic output, it should not be construed as limiting, as any of the UE 112 and/or sensors 110 discussed herein can be specifically configured in a similar manner without departing from the scope of the instant disclosure.

According to some embodiments, UE 112 can be any type of device, such as, but not limited to, a mobile phone, tablet, laptop, sensor, Internet of Things (IoT) device, autonomous machine, air tag, and any other device equipped with a cellular or wireless or wired transceiver. In some embodiments, UE 112 can be a device associated with an individual (or set of individuals) for which security and/or climate control services are being provided. In some embodiments, UE 112 may correspond to a device of a security and/or climate service provider entity (e.g., a thermostat, whereby the device can be and/or can have corresponding sensors 110, as discussed herein).

In some embodiments, a peripheral device (not shown) can be connected to UE 112, and can be any type of peripheral device, such as, but not limited to, a wearable device (e.g., smart watch), printer, speaker, sensor, and the like. In some embodiments, a peripheral device can be any type of device that is connectable to UE 112 (and/or sensor 110 and/or smoke detector 102) via any type of known or to be known pairing mechanism, including, but not limited to, Wi-Fi, Bluetooth^{™}, Bluetooth Low Energy (BLE), NFC, and the like.

According to some embodiments, sensors 110 can correspond to sensors associated with a location of system 100. In some embodiments, the sensors 110 can be, but are not limited to, temperature sensors (e.g., thermocouples, resistance temperature detectors (RTDs), thermistors, semiconductor based integrated circuits (IC), thermometers, and the like, for example) cameras, glass break detectors, motion detectors, door and window contacts, heat and smoke detectors, carbon monoxide (CO) and/or carbon dioxide (CO₂) detectors, passive infrared (PIR) sensors, time-of-flight (ToF) sensors, and the like. For example, sensor 110 can be a smoke detector similar to smoke detector 102.

In some embodiments, the sensors 110 can involve an IoT environment and/or be associated with devices associated with the location of system 100, such as, for example, lights, smart locks, smoke detectors (e.g., smoke detector 102), garage doors, door bells, smart appliances (e.g., thermostat, refrigerator, television, personal assistants (e.g., Alexa^{®}, Nest^{®}, for example)), smart phones, smart watches or other wearables, tablets, personal computers, and the like, and some combination thereof. For example, the sensors 110 can include the sensors on UE 112 (e.g., smart phone) and/or peripheral device (e.g., a paired smart watch).

Accordingly, while the discussion herein may focus on smoke detector usage, any type of sensor and/or combination of sensors can be utilized, as evident from the discussion above and in more detail below.

In some embodiments, network 104 can be any type of network, such as, but not limited to, a wireless network, cellular network, the Internet, and the like (as discussed above). Network 104 facilitates connectivity of the components of system 100, as illustrated in FIG. 1.

According to some embodiments, cloud system 106 may be any type of cloud operating platform and/or network based system upon which applications, operations, and/or other forms of network resources may be located. For example, system 106 may be a service provider and/or network provider from where services and/or applications may be accessed, sourced or executed from. For example, system 106 can represent the cloud-based architecture associated with a security and/or climate-control system provider, which has associated network resources hosted on the internet or private network (e.g., network 104), which enables (via engine 200) the occupancy sensing and extraction management discussed herein.

In some embodiments, cloud system 106 may include a server(s) and/or a database of information which is accessible over network 104. In some embodiments, a database 108 of cloud system 106 may store a dataset of data and metadata associated with local and/or network information related to a user(s) of UE 112/detector 102 and the UE 112/ detector 102, sensors 110, and the services and applications provided by cloud system 106 and/or safety engine 200.

In some embodiments, for example, cloud system 106 can provide a private/proprietary management platform, whereby engine 200, discussed *infra,* corresponds to the novel functionality system 106 enables, hosts and provides to a network 104 and other devices/platforms operating thereon.

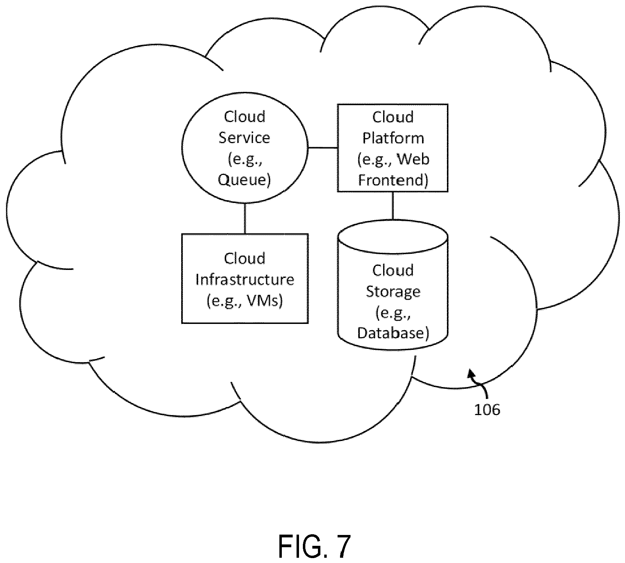

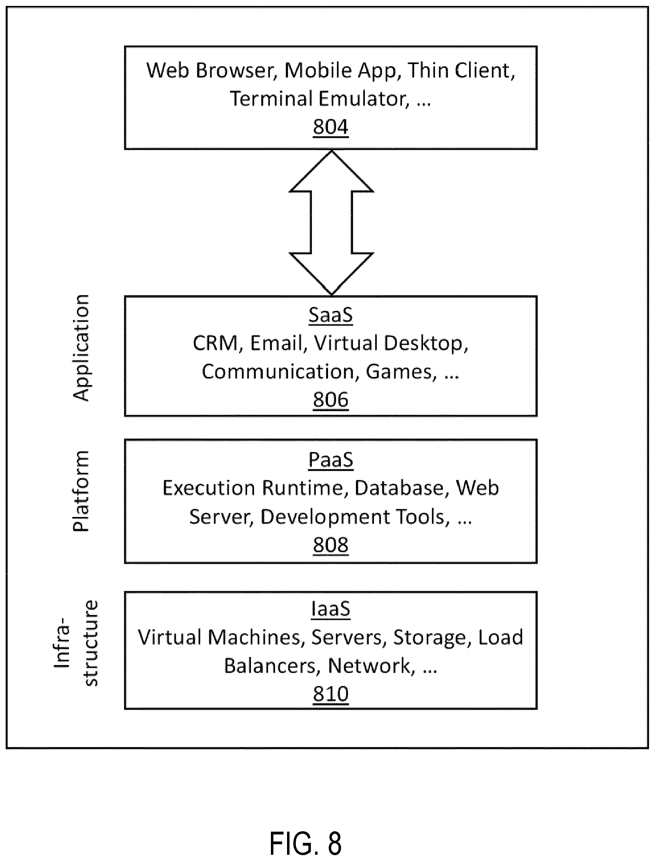

Turning to FIG. 7 and FIG. 8, in some embodiments, the exemplary computer-based systems/platforms, the exemplary computer-based devices, and/or the exemplary computer-based components of the present disclosure may be specifically configured to operate in a cloud computing/architecture 106 such as, but not limiting to: infrastructure a service (IaaS) 810, platform as a service (PaaS) 808, and/or software as a service (SaaS) 806 using a web browser, mobile app, thin client, terminal emulator or other endpoint 804. FIG. 7 and FIG. 8 illustrate schematics of non-limiting implementations of the cloud computing/architecture(s) in which the exemplary computer-based systems for administrative customizations and control of network-hosted APIs of the present disclosure may be specifically configured to operate.

Turning back to FIG. 1, according to some embodiments, database 108 may correspond to a data storage for a platform (e.g., a network hosted platform, such as cloud system 106, as discussed *supra),* a plurality of platforms, and/or UE 112 and/or sensors 110. Database 108 may receive storage instructions/requests from, for example, engine 200 (and associated microservices), which may be in any type of known or to be known format, such as, for example, standard query language (SQL). According to some embodiments, database 108 may correspond to any type of known or to be known storage, for example, a memory or memory stack of a device, a distributed ledger of a distributed network (e.g., blockchain, for example), a look-up table (LUT), and/or any other type of secure data repository.

Safety engine 200, as discussed above and further below in more detail, can include components for the disclosed functionality. According to some embodiments, safety engine 200 may be a special purpose machine or processor, and can be hosted by a device on network 104, within cloud system 106, on UE 112, and/or detector 102 (and/or on sensors 110). In some embodiments, engine 200 may be hosted by a server and/or set of servers associated with cloud system 106.

According to some embodiments, as discussed in more detail below, safety engine 200 may be configured to implement and/or control a plurality of services and/or microservices, where each of the plurality of services/microservices are configured to execute a plurality of workflows associated with performing the disclosed security management. Non-limiting embodiments of such workflows are provided below.

According to some embodiments, as discussed above, safety engine 200 may function as an application provided by cloud system 106. In some embodiments, engine 200 may function as an application installed on a server(s), network location and/or other type of network resource associated with system 106. In some embodiments, engine 200 may function as an application installed and/or executing on UE 112 and/or detector 102. In some embodiments, such application may be a web-based application accessed by UE 112, smoke detector 102 and/or devices associated with sensors 110 over network 104 from cloud system 106. In some embodiments, engine 200 may be configured and/or installed as an augmenting script, program or application (e.g., a plug-in or extension) to another application or program provided by cloud system 106 and/or executing on UE 112, sensors 110 and/or smoke detector 102.

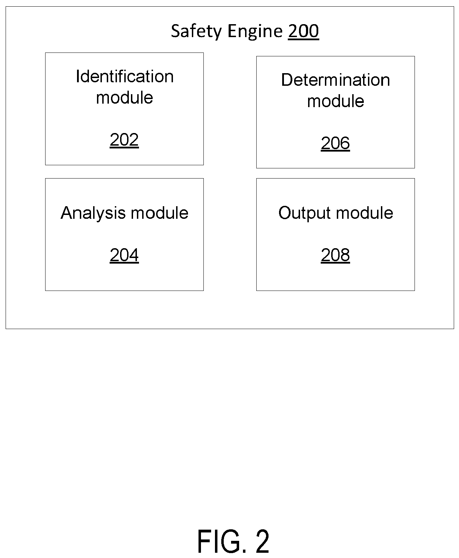

As illustrated in FIG. 2, according to some embodiments, safety engine 200 includes identification module 202, analysis module 204, determination module 206 and output module 208. It should be understood that the engine(s) and modules discussed herein are non-exhaustive, as additional or fewer engines and/or modules (or sub-modules) may be applicable to the embodiments of the systems and methods discussed. More detail of the operations, configurations and functionalities of engine 200 and each of its modules, and their role within embodiments of the present disclosure will be discussed below.

Turning to FIG. 3A and FIG. 3B, depicted are locations 300 and 350, respectively. Each location provides a non-limiting example floor plan and set of two (2) alarms. In FIG. 3A, location 300 provides example alarms 302 and 304, which can be battery-powered alarms. Accordingly, alarms 302 and 304 can electronically communicate with a UE 112 associated with living things within the room. For example, a dog (as pictured) can have an air tag affixed on its collar, whereby smoke detector 302 can communicate therewith given the presence of the dog within the room of detector 302. In another example, smoke detector 304 can communicate with a user's smart phone (as depicted in FIG. 3A). In some embodiments, the smart phone can have an application executing on such device to enable the connection with detector 304.

In FIG. 3B, location 350 provides example alarms 352 and 354, which can be mains-powered alarms. Accordingly, alarms 352 and 354 can electronically communicate with a UE 112 associated with living things within the room. For example, a dog (as pictured) can have an air tag affixed on its collar, whereby smoke detector 352 can communicate therewith given the presence of the dog within the room of detector 302. In another example, smoke detector 354 can communicate with a user's smart phone (as depicted in FIG. 3B).

In some embodiments, the alarms within a location can vary as being mains-powered and battery-powered, which can vary per room and/or type of smoke detector.

Accordingly, as depicted in FIG. 3A and 3B, alarms 302-304 and 352-354, respectively can utilize UWB protocol to determine the relative locations of the living things within rooms of the location (e.g., the dog and person, as discussed *supra).* For example, via UWB protocol, the distance and angle of association from alarm 354 to UE 112 of the person in FIG. 3B can be determined, as well as the device identity of UE 112. As discussed in more detail below, such information can be leveraged to determine floor plans for the location, which can be utilized to enable a safe and efficient positional identification of such living things should an emergency occur.

In some embodiments, as discussed above, the alarms depicted in FIG. 3A and FIG. 3B, can additionally include and/or be any type of sensor 110 or UE 112, as discussed above.

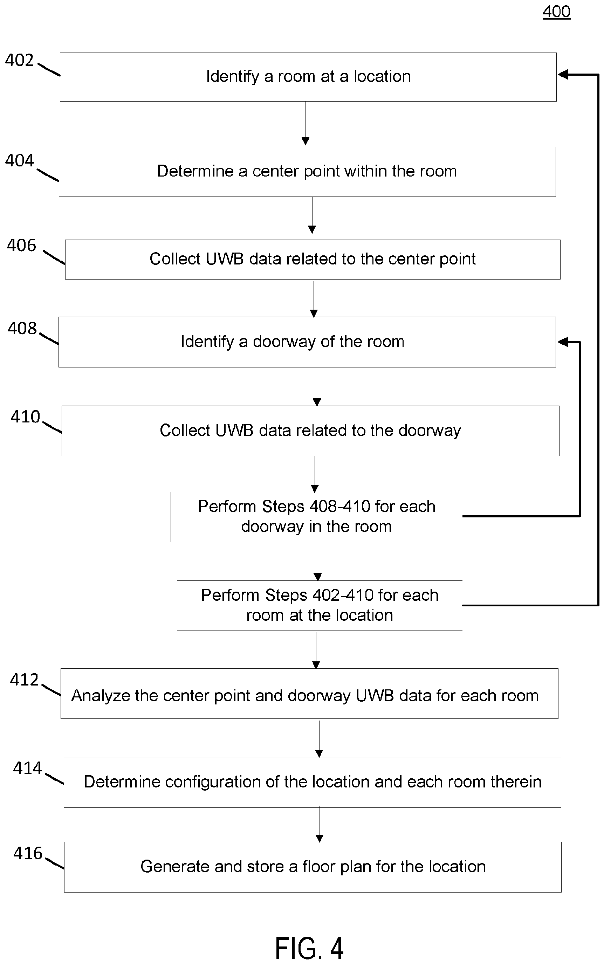

Turning to FIG. 4, provided is Process 400 which details non-limiting example embodiments for determining a floor plan for a location.

According to some embodiments, Steps 402 and 408 of Process 400 can be performed by identification module 202 of safety engine 200; Steps 404 and 414 can be performed by determination module 206; Steps 406, 410 and 412 can be performed by analysis module 204; and Step 416 can be performed by output module 208.

According to some embodiments, Process 400 begins with Step 402 where a room within a location is identified. In some embodiments, Step 402 can involve analyzing information about a location (e.g., an electronic deed, picture or other type of document that includes information about the location) and determining a number of rooms within the location. For example, Step 402 can identify that a location has 1 kitchen, 1 living room, 2 bedrooms, 1 bathroom, and the like. Thus, in Step 402, engine 200 can select one of such rooms to begin the processing discussed herein.

In Step 404, engine 200 can determine a center point for the room. According to some embodiments, engine 200 can analyze sensor data (e.g., collected from detector 102 and/or sensors 110, discussed *supra)* and determine a positional center within the floor of the identified room. In some embodiments, the center point can be based on distance/angle information from the smoke detector in the room, as discussed above. In some embodiments, engine 200 can provide instructions to a user to move to the center of the room, which can enable the user's positioning to be equidistant to each of the 3 or more wall boundaries of the room.

According to some embodiments, Step 404 can involve a user providing input and/or feedback as to a label or tag, which can provide an indication as to which room such center point corresponds to. For example, the user can enter a voice command stating, "I am in the center of the Kitchen", for example. In another example, the user can type a tag. In some embodiments, such label or tag can be automatically generated by engine 200.

In Step 406, upon identification of the center of the room, engine 200 can collect the UWB data for the room. For example, as discussed above, the distance and angle information from a smoke detector (or other UWB equipped sensor) to the center point in the room. In some embodiments, such UWB data can be utilized to adjust the center point (from Step 404) to more accurately correspond to a "true" measured center of the room. In some embodiments, such collected data can be stored in database 108.

In Step 408, engine 200 can identify a doorway for the room. In some embodiments, Step 408 can involve identifying a position that is within the room, in front of the doorway and a threshold distance away from the doorway (e.g., 1 foot, for example). In some embodiments, the position can correspond to being "in" the doorway. Accordingly, in some embodiments, Step 408 can involve engine 200 providing instructions for the user to move to such position, and label/tag such position accordingly. Moreover, in a similar manner as discussed above respective to Step 404, input/feedback can be provided/generated indicating a specific doorway and/or positional relationship to the doorway (e.g., in front of the doorway or "in" in the doorway, for example).

In Step 410, engine 200 can collect the UWB data related to the doorway, which can be performed in a similar manner as discussed above at least in relation to Step 406. In some embodiments, such collected data can be stored in database 108.

According to some embodiments, engine 200 can execute, cause and/or facilitate the operations of Steps 408-410 for each doorway of the room, and then Steps 402-410 for each room in the location.

Thus, in some embodiments, each room's center position can be determined, and the position and number of walls, and the position of associated doorways, can be determined as well, as discussed *infra.*

Continuing with Process 400, upon analysis of each room, engine 200 can execute Step 412. In Step 412, engine 200 analyzes the center point UWB data (from Step 406) and doorway UWB data (from Step 410) for each room in the location. Based on such analysis, engine 200, in Step 414, can determine a configuration of the location and each room therein. That is, engine 200 can generate a floor plan for the location that identifies, *inter alia,* the walls, doorways and rooms of the location.

In some embodiments, engine 200 can implement any type of known or to be known computational analysis technique, algorithm, mechanism or technology to perform the analysis and determination in Steps 412-414.

In some embodiments, engine 200 may include a specific trained artificial intelligence / machine learning model (AI/ML), a particular machine learning model architecture, a particular machine learning model type (e.g., convolutional neural network (CNN), recurrent neural network (RNN), autoencoder, support vector machine (SVM), and the like), or any other suitable definition of a machine learning model or any suitable combination thereof.

In some embodiments, engine 200 may be configured to utilize one or more AI/MI, techniques chosen from, but not limited to, computer vision, feature vector analysis, decision trees, boosting, support-vector machines, neural networks, nearest neighbor algorithms, Naive Bayes, bagging, random forests, logistic regression, and the like. By way of a non-limiting example, engine 200 can implement an XGBoost algorithm for regression and/or classification to analyze the sensor data, as discussed herein.

According to some embodiments and, optionally, in combination of any embodiment described above or below, a neural network technique may be one of, without limitation, feedforward neural network, radial basis function network, recurrent neural network, convolutional network (e.g., U-net) or other suitable network. In some embodiments and, optionally, in combination of any embodiment described above or below, an implementation of Neural Network may be executed as follows:
a. define Neural Network architecture/model,
b. transfer the input data to the neural network model,
c. train the model incrementally,
d. determine the accuracy for a specific number of timesteps,
e. apply the trained model to process the newly-received input data,
f. optionally and in parallel, continue to train the trained model with a predetermined periodicity.

In some embodiments and, optionally, in combination of any embodiment described above or below, the trained neural network model may specify a neural network by at least a neural network topology, a series of activation functions, and connection weights. For example, the topology of a neural network may include a configuration of nodes of the neural network and connections between such nodes. In some embodiments and, optionally, in combination of any embodiment described above or below, the trained neural network model may also be specified to include other parameters, including but not limited to, bias values/functions and/or aggregation functions. For example, an activation function of a node may be a step function, sine function, continuous or piecewise linear function, sigmoid function, hyperbolic tangent function, or other type of mathematical function that represents a threshold at which the node is activated. In some embodiments and, optionally, in combination of any embodiment described above or below, the aggregation function may be a mathematical function that combines (e.g., sum, product, and the like) input signals to the node. In some embodiments and, optionally, in combination of any embodiment described above or below, an output of the aggregation function may be used as input to the activation function. In some embodiments and, optionally, in combination of any embodiment described above or below, the bias may be a constant value or function that may be used by the aggregation function and/or the activation function to make the node more or less likely to be activated.

In some embodiments, the determined information from Step 412 and Step 414 can be stored in database 108, as discussed above.

Thus, in some embodiments, in Step 416, engine 200 can generate the floor plan for the location, which can be stored in database 108.

By way of a non-limiting example, FIG. 6A, FIG. 6B, and FIG. 6C provide illustrative embodiments for the identification of positions within a location and rooms therein, which can be leveraged to determine the doorways and walls of each respective room in the location, which can then enable the floorplan generation discussed above. For example, as depicted in FIG. 6A, center points for rooms: Office 1, Office 2, Lab, Kitchen, Bathroom, Living Room and Bedroom are depicted. Further, the location of doorways within each room are also labeled and depicted. In FIG. 6B, the pairs of doorway-labeled points between adjoining rooms can be identified and utilized to determine that a wall is between such rooms. In some embodiments, when doorway labels correspond to "in" doorway points, as discussed above, pairs may not be utilized. Then, based on the determination of the walls, as well as the distance and angle information related to the center point of each room, a floor plan can be generated, as depicted in FIG. 6C.

For example, as depicted in FIG. 6A, FIG. 6B, and FIG. 6C, engine 200 can utilize a partitioning algorithm, such as, for example, Voronoi partitioning to generate the floor plan, where the labeled center points can serve as partition center inputs, and a constraint(s) can be applied that such partition boundaries should traverse through the doorway labeled points and the walls should form a predetermined angle (e.g., 90 degrees).

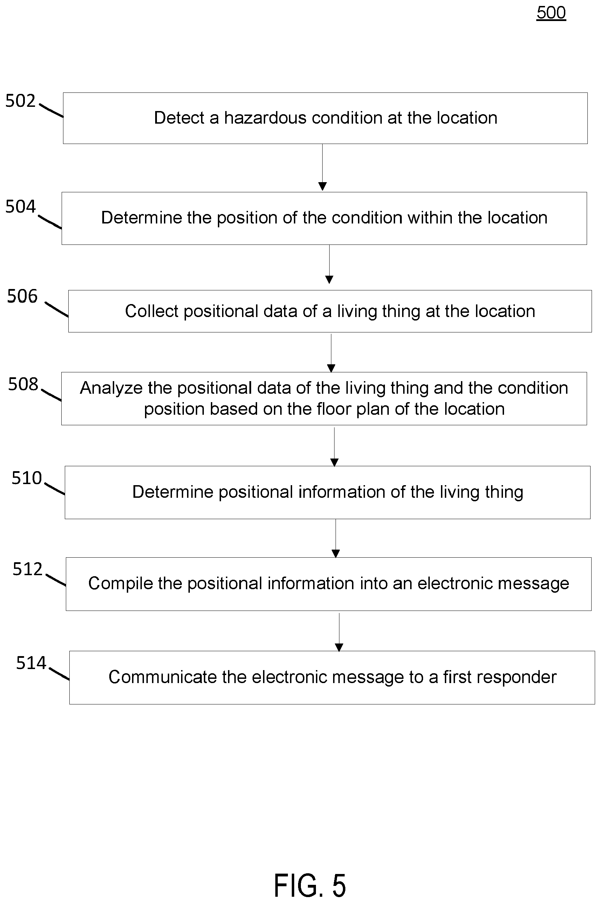

Turning to FIG. 5, provided is Process 500 which details non-limiting example embodiments for performing location sensing of a living thing upon detection of an emergency at the location (e.g., a fire).

It should be understood that while the discussion herein focuses on an emergency situation, usage of the disclosed framework is not so limiting, as any type of known or to be known real-world (and/or digital) situation arise where a living being (e.g., person, pet, plant, and the like) and/or article (e.g., item, and/or any other type of physical item) is desired to be located or tracked.

By way of some non-limiting example, as evident from the disclosure herein, the disclosed framework can be utilized for, but not limited to, elder care (e.g., location of individuals in a home where they have fallen or need a well-being check), ill-person care (e.g., individuals with dementia where their activity patterns can be monitored for deviations from the norm from which an onset of the illness' symptoms can be determined therefrom), pet tracking (e.g., ensuring they remain in desired rooms or locations, and/or have not escaped the home (e.g., a type of geo-fencing to ensure they remain in safe locations)), child tracking (e.g. similar to pet tracking, *supra,* to make sure they remain in specific locations and do not move to undesired locations, either intentionally or unintentionally), occupancy-driven thermostat control (e.g., prioritize rooms where living things are tracked to be active and/or present, and additionally ensuring such living things' preferences are accounted for in the thermostat control), tracking jewelry (e.g., similar to pets and children tracking above - ensure the jewelry maintains its location in the jewelry box in the bedroom), and the like.

Accordingly, the discussion below will focus a non-limiting embodiment for location sensing of a living thing upon detection of an emergency at the location.

According to some embodiments, Steps 502 and 506 of Process 500 can be performed by identification module 202 of safety engine 200; Steps 504 and 510 can be performed by determination module 206; Step 508 can be performed by analysis module 204; and Steps 512-514 can be performed by output module 208.

According to some embodiments, Process 500 begins with Step 502 where engine 200 can receive sensor information from at least one sensor at the location. For example, as discussed above at least in relation to FIG. 1, a smoke detector 102 can detect smoke within a room at a home.

In some embodiments, the sensor information received in Step 302 can be collected according to a criteria, which can be in accordance with, but not limited to, a time period, a time interval, a detected event, continuously, a user request, and the like, or some combination thereof.

In Step 504, a position of the condition can be determined. In some embodiments, such position information can be based on and/or correspond to the location of the sensor that provided such condition alert. For example, the location of the smoke detector in Step 502 can be utilized as the position.

In some embodiments, Step 504 can involve engine 200 analyzing the collected sensor information (from Step 502). In some embodiments, the sensor information can be parsed, whereby data and/or metadata related to a detected event can be identified and/or extracted from the data. For example, fire event information can be identified, which can be related to, but not limited to, position within the location, spread of fire, thermal conditions, number of people in the location, types or identities of people, current movement direction of each person, number and types of pets (and/or plants), air quality, fire intensity, and the like, or some combination thereof. According to some embodiments, such analysis and determinations can be performed via the AI/MI, computations discussed above.

In Step 506, engine 200 can collect positional data of a living thing(s) at the location. For example, where is a person or pet in relation to the smoke detector that was triggered in Step 502. In some embodiments, such positional data can correspond to and/or be based on the UWB data between the smoke detector and UE of the user, as discussed above. In some embodiments, sensor data can be analyzed and such positional data can be determined via an AI/ML model analysis, which can be performed in a similar manner as discussed above.

In Step 508, engine 200 can analyze the positional data of the living thing(s) and the position of the condition based on the floor plan of the location. In some embodiments, upon detection of the hazardous condition, engine 200 can identify (or retrieve from database 108) the generated floor plan (from Step 416, discussed *supra),* and utilize such information to determine a precise location within the structure of the location.

Accordingly, Step 508's analysis can result in a determination of the positional information of the living thing(s), as in Step 510. For example, Step 510 can result in determining that a person is 10 feet from the smoke detector in the kitchen, at a 45 degree angle. In some embodiments, such information can be stored in database 108. Further, in another example, the positional information can further show or guide a person as to how to most efficiently enter the building (from the front door, for example) and arrive at the kitchen.

In Step 512, engine 200 can compile the positional information into an electronic message (or computer-executable instructions). For example, engine 200 can compile an audio message to be communicated over a specific radio channel (e.g., format the content specific to that channel and communication mechanism). For example, a firefighter incident command (IC) member can be radioed specifically with generated instructions for entering the location (e.g., which entry to choose) and how to navigate to the living things in the location (e.g., which room they are in and how to get there). By way of non-limiting examples, the communication can be formatted specifically for and provided to a first responder for display within i) a heads-up display/augmented reality display in the helmet, or 2) a vibration belt that vibrates in the direction of occupants, among other types of equipment that can aid a first responder during an emergency

In some embodiments, the communication may be sent to a cloud location, such that network resources of the cloud can be utilized to relay the information of the message/instructions to the appropriate first responders.

In some embodiments, in another non-limiting example, engine 200 can generate instructions that can cause sensors and/or other components at the location (e.g., sprinkler systems, for example) to activate in line with the position of the living thing.

In Step 514, engine 200 can communicate the electronic message (or instructions) to a first responder. As discussed above, such communication can enable actionable operations to be performed at the location (e.g., trigger sirens, unlock doors, and the like) which can assist a first responder in locating and extracting a living thing during an emergency. For example, each sensor can be provided specific instructions that are particular to their position in the location and along the exit route so as to display contextually relevant content related to the person's movement along the exit route in relation to the person's currently tracked position and the position of the exit. For example, a sensor can display an arrow pointing the person to the direction of the next sensor (and arrow) and/or the exit from the location.

In some embodiments, upon the communication in Step 514, engine 200 can monitor (e.g., continuously, according to a time period and/or detected event) the location until it is determined that the living thing has exited the location safely. Thus, in some embodiments, processing of Process 500 can recursively proceed back to Step 506 until no positional data of the living thing(s) is collected within the location.

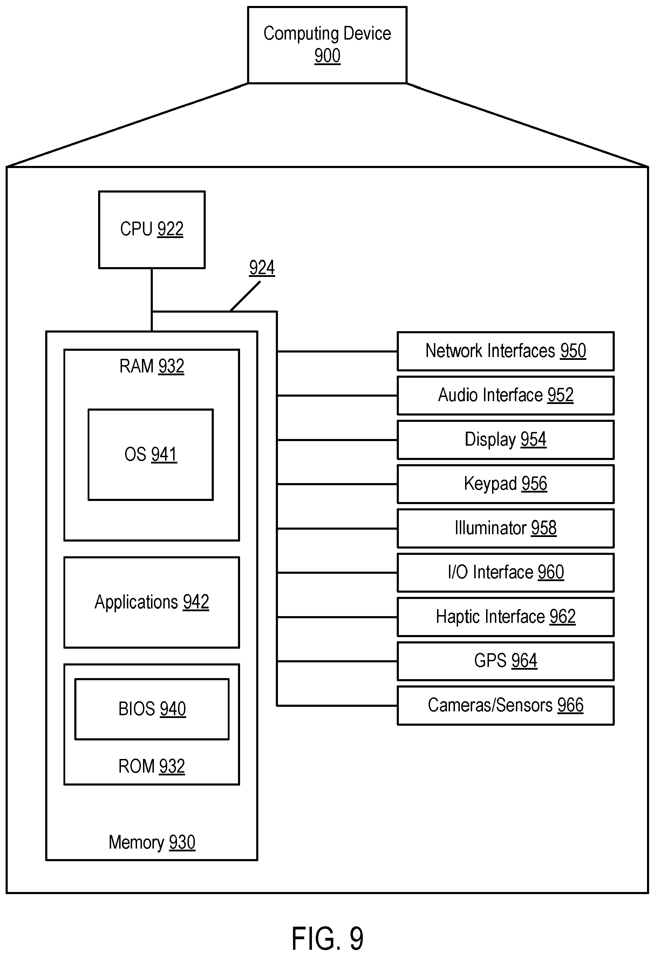

FIG. 9 is a schematic diagram illustrating a client device showing an example embodiment of a client device that may be used within the present disclosure. Client device 900 may include many more or less components than those shown in FIG. 9. However, the components shown are sufficient to disclose an illustrative embodiment for implementing the present disclosure. Client device 900 may represent, for example, UE 112 discussed above at least in relation to FIG. 1.

As shown in the figure, in some embodiments, Client device 900 includes a processing unit (CPU) 922 in communication with a mass memory 930 via a bus 924. Client device 900 also includes a power supply 926, one or more network interfaces 950, an audio interface 952, a display 954, a keypad 956, an illuminator 958, an input/output interface 960, a haptic interface 962, an optional global positioning systems (GPS) receiver 964 and a camera(s) or other optical, thermal or electromagnetic sensors 966. Device 900 can include one camera/sensor 966, or a plurality of cameras/sensors 966, as understood by those of skill in the art. Power supply 926 provides power to Client device 900.

Client device 900 may optionally communicate with a base station (not shown), or directly with another computing device. In some embodiments, network interface 950 is sometimes known as a transceiver, transceiving device, or network interface card (NIC).

Audio interface 952 is arranged to produce and receive audio signals such as the sound of a human voice in some embodiments. Display 954 may be a liquid crystal display (LCD), gas plasma, light emitting diode (LED), or any other type of display used with a computing device. Display 954 may also include a touch sensitive screen arranged to receive input from an object such as a stylus or a digit from a human hand.

Keypad 956 may include any input device arranged to receive input from a user. Illuminator 958 may provide a status indication and/or provide light.

Client device 900 also includes input/output interface 960 for communicating with external. Input/output interface 960 can utilize one or more communication technologies, such as USB, infrared, Bluetooth^{™}, or the like in some embodiments. Haptic interface 962 is arranged to provide tactile feedback to a user of the client device.

Optional GPS transceiver 964 can determine the physical coordinates of Client device 900 on the surface of the Earth, which typically outputs a location as latitude and longitude values. GPS transceiver 964 can also employ other geo-positioning mechanisms, including, but not limited to, triangulation, assisted GPS (AGPS), E-OTD, CI, SAI, ETA, BSS or the like, to further determine the physical location of client device 900 on the surface of the Earth. In one embodiment, however, Client device may through other components, provide other information that may be employed to determine a physical location of the device, including for example, a MAC address, Internet Protocol (IP) address, or the like.

Mass memory 930 includes a RAM 932, a ROM 934, and other storage means. Mass memory 930 illustrates another example of computer storage media for storage of information such as computer readable instructions, data structures, program modules or other data. Mass memory 930 stores a basic input/output system ("BIOS") 940 for controlling low-level operation of Client device 900. The mass memory also stores an operating system 941 for controlling the operation of Client device 900.

Memory 930 further includes one or more data stores, which can be utilized by Client device 900 to store, among other things, applications 942 and/or other information or data. For example, data stores may be employed to store information that describes various capabilities of Client device 900. The information may then be provided to another device based on any of a variety of events, including being sent as part of a header (e.g., index file of the HLS stream) during a communication, sent upon request, or the like. At least a portion of the capability information may also be stored on a disk drive or other storage medium (not shown) within Client device 900.

Applications 942 may include computer executable instructions which, when executed by Client device 900, transmit, receive, and/or otherwise process audio, video, images, and enable telecommunication with a server and/or another user of another client device. Applications 942 may further include a client that is configured to send, to receive, and/or to otherwise process gaming, goods/services and/or other forms of data, messages and content hosted and provided by the platform associated with engine 200 and its affiliates.

As used herein, the terms "computer engine" and "engine" identify at least one software component and/or a combination of at least one software component and at least one hardware component which are designed/programmed/configured to manage/control other software and/or hardware components (such as the libraries, software development kits (SDKs), objects, and the like).

Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. In some embodiments, the one or more processors may be implemented as a Complex Instruction Set Computer (CISC) or Reduced Instruction Set Computer (RISC) processors; x86 instruction set compatible processors, multicore, or any other microprocessor or central processing unit (CPU). In various implementations, the one or more processors may be dual-core processor(s), dual-core mobile processor(s), and so forth.

Computer-related systems, computer systems, and systems, as used herein, include any combination of hardware and software. Examples of software may include software components, programs, applications, operating system software, middleware, firmware, software modules, routines, subroutines, functions, methods, procedures, software interfaces, application program interfaces (API), instruction sets, computer code, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

For the purposes of this disclosure a module is a software, hardware, or firmware (or combinations thereof) system, process or functionality, or component thereof, that performs or facilitates the processes, features, and/or functions described herein (with or without human interaction or augmentation). A module can include sub-modules. Software components of a module may be stored on a computer readable medium for execution by a processor. Modules may be integral to one or more servers, or be loaded and executed by one or more servers. One or more modules may be grouped into an engine or an application.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores," may be stored on a tangible, machine readable medium and supplied to various customers or manufacturing facilities to load into the fabrication machines that make the logic or processor. Of note, various embodiments described herein may, of course, be implemented using any appropriate hardware and/or computing software languages (e.g., C++, Objective-C, Swift, Java, JavaScript, Python, Perl, QT, and the like).

For example, exemplary software specifically programmed in accordance with one or more principles of the present disclosure may be downloadable from a network, for example, a website, as a stand-alone product or as an add-in package for installation in an existing software application. For example, exemplary software specifically programmed in accordance with one or more principles of the present disclosure may also be available as a client-server software application, or as a web-enabled software application. For example, exemplary software specifically programmed in accordance with one or more principles of the present disclosure may also be embodied as a software package installed on a hardware device.

For the purposes of this disclosure the term "user", "subscriber" "consumer" or "customer" should be understood to refer to a user of an application or applications as described herein and/or a consumer of data supplied by a data provider. By way of example, and not limitation, the term "user" or "subscriber" can refer to a person who receives data provided by the data or service provider over the Internet in a browser session, or can refer to an automated software application which receives the data and stores or processes the data. Those skilled in the art will recognize that the methods and systems of the present disclosure may be implemented in many manners and as such are not to be limited by the foregoing exemplary embodiments and examples. In other words, functional elements being performed by single or multiple components, in various combinations of hardware and software or firmware, and individual functions, may be distributed among software applications at either the client level or server level or both. In this regard, any number of the features of the different embodiments described herein may be combined into single or multiple embodiments, and alternate embodiments having fewer than, or more than, all of the features described herein are possible.

Functionality may also be, in whole or in part, distributed among multiple components, in manners now known or to become known. Thus, myriad software/hardware/firmware combinations are possible in achieving the functions, features, interfaces and preferences described herein. Moreover, the scope of the present disclosure covers conventionally known manners for carrying out the described features and functions and interfaces, as well as those variations and modifications that may be made to the hardware or software or firmware components described herein as would be understood by those skilled in the art now and hereafter.

Furthermore, the embodiments of methods presented and described as flowcharts in this disclosure are provided by way of example in order to provide a more complete understanding of the technology. The disclosed methods are not limited to the operations and logical flow presented herein. Alternative embodiments are contemplated in which the order of the various operations is altered and in which sub-operations described as being part of a larger operation are performed independently.

While various embodiments have been described for purposes of this disclosure, such embodiments should not be deemed to limit the teaching of this disclosure to those embodiments. Various changes and modifications may be made to the elements and operations described above to obtain a result that remains within the scope of the systems and processes described in this disclosure.

## Claims

1. A method comprising:
detecting, by a device, a hazardous condition at a location;
determining, by the device, a current position within the location corresponding to the hazardous condition;
collecting, by the device, positional data of a living thing at the location;
analyzing, by the device, the positional data and the current position of the hazardous condition based on a floor plan of the location;
determining, by the device, based on the analysis, a current position of the living thing, the current position corresponding to a position within a specific room of the location; and
communicating, by the device, electronic information to a device of a first responder, the electronic information comprising instructions for locating the living thing within the location in accordance with the current position of the living thing.

2. The method of claim 1, further comprising:
identifying a set of rooms within the location, at least a portion of the set of rooms comprising a smoke detector; and
determining a center position for each room of the set of rooms, the center position of each room based on Ultra-Wide Band (UWB) data between the smoke detector and a device associated with the living thing.

3. The method of claim 2, further comprising:
identifying at least one doorway for each room in the set of rooms; and
determining, for each room, a position of each doorway based on the UWB data.

4. The method of claim 3, further comprising:
analyzing, for each room in the set of rooms, the UWB data related to the doorways and the center point; and
determining a configuration of the location, wherein the floor plan of the location is based on the determined location configuration.

5. The method of claim 2, wherein the UWB data comprising information related to a direction, angle and device identifier.

6. The method of claim 1, further comprising:
identifying a communication path for transmitting the electronic message; and
formatting the electronic information based on a type of the communication path; and/or
wherein the electronic information causes a the device of the first responder to output information that indicates the current position of the living thing.

7. The method of claim 1, wherein the communication of the electronic information further causes at least one device associated with the location to output information related to the current position of the living thing; and/or
wherein the living thing is a person or pet; and/or
wherein the location comprises a definable physical area for which the smoke detector is positioned.

8. A device comprising:
a processor configured to:
detect a hazardous condition at a location;
determine a current position within the location corresponding to the hazardous condition;
collect positional data of a living thing at the location;
analyze the positional data and the current position of the hazardous condition based on a floor plan of the location;
determine, based on the analysis, a current position of the living thing, the current position corresponding to a position within a specific room of the location; and
communicate electronic information to a device of a first responder, the electronic information comprising instructions for locating the living thing within the location in accordance with the current position of the living thing.

9. The device of claim 8, wherein the processor is further configured to:
identify a set of rooms within the location, at least a portion of the set of rooms comprising a smoke detector;
determine a center position for each room of the set of rooms, the center position of each room based on Ultra-Wide Band (UWB) data between the smoke detector and a device associated with the living thing, the UWB data comprising information related to a direction, angle and device identifier;
identify at least one doorway for each room in the set of rooms; and
determine, for each room, a position of each doorway based on the UWB data.

10. The device of claim 9, wherein the processor is further configured to:
analyze, for each room in the set of rooms, the UWB data related to the doorways and the center point; and
determine a configuration of the location, wherein the floor plan of the location is based on the determined location configuration.

11. The device of claim 8, wherein the processor is further configured to:
identify a communication path for transmitting the electronic message; and
format the electronic information based on a type of the communication path; and/or wherein the electronic information causes a the device of the first responder to output information that indicates the current position of the living thing.

12. A non-transitory computer-readable storage medium tangibly encoded with computer-executable instructions that when executed by a device, perform a method comprising:
detecting, by the device, a hazardous condition at a location;
determining, by the device, a current position within the location corresponding to the hazardous condition;
collecting, by the device, positional data of a living thing at the location;
analyzing, by the device, the positional data and the current position of the hazardous condition based on a floor plan of the location;
determining, by the device, based on the analysis, a current position of the living thing, the current position corresponding to a position within a specific room of the location; and
communicating, by the device, electronic information to a device of a first responder, the electronic information comprising instructions for locating the living thing within the location in accordance with the current position of the living thing.

13. The non-transitory computer-readable storage medium of claim 12, further comprising:
identifying a set of rooms within the location, at least a portion of the set of rooms comprising a smoke detector;
determining a center position for each room of the set of rooms, the center position of each room based on Ultra-Wide Band (UWB) data between the smoke detector and a device associated with the living thing, the UWB data comprising information related to a direction, angle and device identifier;
identifying at least one doorway for each room in the set of rooms; and
determining, for each room, a position of each doorway based on the UWB data.

14. The non-transitory computer-readable storage medium of claim 13, further comprising:
analyzing, for each room in the set of rooms, the UWB data related to the doorways and the center point; and
determining a configuration of the location, wherein the floor plan of the location is based on the determined location configuration.

15. The non-transitory computer-readable storage medium of claim 12, further comprising:
identifying a communication path for transmitting the electronic message; and
formatting the electronic information based on a type of the communication path; and/or
wherein the electronic information causes the device of the first responder to output information that indicates the current position of the living thing.
